# EUROPÄISCHE PATENTANMELDUNG

(11) **EP 2 689 867 A1**
(43) Veröffentlichungstag der Anmeldung: **29.01.2014**
(21) Anmeldenummer: 12005479.6
(22) Anmeldetag: 27.07.2012
(51) Int. Cl.: B21J 15/04, B21J 15/14, F16B 19/10

(54) **Verbindungselement und Setzgerät für ein Verbindungselement**

(71) Anmelder: GESIPA Blindniettechnik GmbH, 64546 Mörfelden-Walldorf (DE)
(72) Erfinder: Bamberger Thomas, 65779 Kelkheim (DE); Dumpe Christoph, 45968 Gladbeck (DE); Gärtner Richard Dr., 64347 Griesheim (DE); Wille Lothar, 64546 Mörfelden-Walldorf (DE); Harder Hans-Ulrich, 64546 Mörfelden-Walldorf (DE)
(74) Vertreter: Knoblauch, Andreas

(57) **Zusammenfassung**

Es wird ein Verbindungselement (1) angegeben mit einem Setzkopf (2) und einem an den Setzkopf (2) anschließenden Schaft (4), der eine einen Längskanal (6) umgebende Wand (5) aufweist, die zwischen dem Setzkopf (2) und einem vom Setzkopf (2) abgewandten Endabschnitt (7) mindestens einen Längsschlitz (8) aufweist.

Man möchte eine Verbindung von Bauelementen einfach gestalten.

Hierzu ist vorgesehen, dass der Endabschnitt (7) an seiner dem Längskanal (6) zugewandten Innenseite (11) glatt ist.

## Beschreibung

Die Erfindung betrifft ein Verbindungselement mit einem Setzkopf und einem an den Setzkopf anschließenden Schaft, der eine einen Längskanal umgebende Wand aufweist, die zwischen dem Setzkopf und einem vom Setzkopf abgewandten Endabschnitt mindestens einen Längsschlitz aufweist.

Ferner betrifft die Erfindung ein Setzgerät für ein Verbindungselement, das einen Setzkopf und einen an den Setzkopf anschließenden Schaft mit einer einen Längskanal umgebenden Wand aufweist, die zwischen dem Setzkopf und einem vom Setzkopf abgewandten Endabschnitt mindestens einen Längsschlitz aufweist, wobei das Setzgerät einen Gegenhalter, einen Zugantrieb und einen durch den Zugantrieb in einer Zugrichtung relativ zum Gegenhalter bewegbaren Zugkopf aufweist.

Bei der Verbindung von größeren Bauelementen, wie sie beispielsweise bei Modulen für Gebäude oder LKW verwendet werden, werden zwei oder mehr Bauelemente so übereinander angeordnet, dass Bohrungen in den Bauelementen fluchten. Man kann dann ein Verbindungselement durch die fluchtenden Bohrungen führen. Als Verbindungselement kann man beispielsweise eine Schraube verwenden, die durch die Bohrungen hindurch gesteckt wird. Allerdings ist es hierbei erforderlich, einen Zugriff von der anderen Seite der Bauelemente zu haben, um dort eine Unterlegscheibe und eine Mutter auf die Schraube aufzusetzen und dort fest zu spannen. Dies ist in vielen Fällen nur dann möglich, wenn zur Montage zwei Personen zur Verfügung stehen. Darüber hinaus ist die Verwendung von Schrauben für den Monteur mühsam. In der Regel werden Schrauben mit Schlagschrauben festgezogen, die unangenehme Vibrationen erzeugen und zudem erhebliche Geräusche verursachen.

Man hat daher ein Verbindungselement der eingangs genannten Art vorgeschlagen, bei dem im Endabschnitt ein Innengewinde angeordnet ist. Um das Verbindungselement zu befestigen, wird es zunächst durch die fluchtenden Bohrungen der Bauelemente geführt. Das Verbindungselement ist dabei auf einen Zugdorn aufgeschraubt. Das Aufschrauben kann erfolgen, bevor das Verbindungselement durch die fluchtenden Bohrungen geführt wird oder danach. Wenn das Verbindungselement durch die Bohrungen hindurch geführt worden ist, wird der Zugdorn mit einer Zugkraft beaufschlagt und sozusagen aus dem Verbindungselement herausgezogen. Hierbei beult sich der Schaft zwischen den Längsschlitzen aus und bildet eine Art Schließkopf, der an der "Rückseite" des letzten Bauelements anliegt. Sobald die Verformung abgeschlossen ist, wird der Zugdorn wieder aus dem Verbindungselement herausgeschraubt. Das Ein- und Ausschrauben des Zugdorns erfordert zusätzliche Zeit und ist relativ umständlich, so dass sich gegenüber der Verwendung einer Schraube keine nennenswerten Vorteile ergeben, wenn man davon absieht, dass ein derartiges Verbindungselement von einer einzigen Seite aus gesetzt werden kann.

Der Erfindung liegt die Aufgabe zugrunde, die Verbindung von Bauelementen einfach zu gestalten.

Diese Aufgabe wird bei einem Verbindungselement der eingangs genannten Art dadurch gelöst, dass der Endabschnitt an seiner dem Längskanal zugewandten Innenseite glatt ist.

Ein derartiges Verbindungselement lässt sich relativ einfach montieren und verformen, ohne dass hierzu viele Arbeitsschritte erforderlich sind. Da der Endabschnitt an seiner Innenseite glatt ist, lässt sich ein Werkzeug ohne Behinderungen bis in den Endabschnitt oder sogar durch den Endabschnitt hindurch führen. Man muss dann lediglich das Werkzeug expandieren, also einen Kraft-, Form- oder Reibschluss zwischen dem Werkzeug und dem Endabschnitt erzeugen, so dass sich eine Verformung des Schaftes ergibt, wenn das Werkzeug in eine Richtung aus dem Verbindungselement herausgezogen wird. Dies wird weiter unten näher erläutert. Der Begriff "glatt" ist hier nicht allzu eng auszulegen. Der Endabschnitt kann durchaus eine gewisse Rauhigkeit aufweisen. Der Endabschnitt weist aber an seiner Innenseite keine Befestigungskontur auf, die mit einem Zugdorn oder dergleichen in Verbindung gebracht werden muss. Vielmehr reicht es aus, wenn das Werkzeug, das zum Verformen des Schafts verwendet wird, unter dem oben angegebenen Kraft-, Form- oder Reibschluss an dem Endabschnitt anliegt. Darüber hinaus lassen sich die Fertigungskosten niedrig halten, weil der Arbeitsgang des Gewindeformens entfällt.

Vorzugsweise weist der Längskanal über seine Länge einen gleich bleibenden Querschnitt auf. Dies vereinfacht die Fertigung eines derartigen Verbindungselements ganz erheblich. Der Längskanal kann beispielsweise die Form eines Hohlzylinders aufweisen, so dass ein Werkzeug, das durch den Längskanal geführt wird, nicht durch irgendwelche Engstellen oder dergleichen behindert wird. Das Werkzeug kann dann den größtmöglichen Querschnitt aufweisen, so dass es in der Lage ist, in ausreichendem Maße Kräfte auf den Endabschnitt zu übertragen.

Vorzugsweise weist der Schaft einen Außendurchmesser von mindestens 8 mm, vorzugsweise mindestens 10 mm auf. Damit ist das Verbindungselement in der Lage, eine 8 mm oder 10 mm Schraube zu ersetzen. In vielen Fällen werden sogar noch größere Durchmesser verwendet, beispielsweise 12 mm, 15 mm oder mehr. Je größer der Außendurchmesser des Verbindungselements ist, desto größer sind in der Regel auch die Belastungen, die ein derartiges Verbindungselement aufnehmen kann.

Vorzugsweise weist die Wand eine radiale Dicke von mindestens 1 mm, vorzugsweise mindestens 1,2 mm auf. In vielen Fällen kann man auch größere Wandstärken verwenden, beispielsweise 1,5 mm oder mehr. Auch die Dicke der Wand hat Einfluss auf die Scherkraft und die Belastbarkeit des Verbindungselements. Allerdings nimmt auch der Verformungswiderstand des Schaftes bei einer größeren Wanddicke zu. Dies ist aber in gewissen Grenzen durchaus akzeptabel.

Der Außendurchmesser und die Wandstärke richten sich nach den für die Verbindung notwendigen Scherkräften.

Bevorzugterweise geht der Setzkopf mit einer konisch ausgebildeten Fläche in den Schaft über. Das Verbindungselement ist mit einem Senkkopf ausgebildet, so dass es bei einer entsprechenden Ausgestaltung der zu verbindenden Bauelemente bündig mit der Oberfläche des entsprechenden Bauelements eingebaut werden kann.

Die Aufgabe wird bei einem Setzgerät der eingangs genannten Art dadurch gelöst, dass der Zugkopf zumindest an seinem freien Ende in radialer Richtung expandierbar ist.

Der Zugkopf wird also in den Verbinder eingesetzt und durch den Längskanal geführt, bis das freie Ende, also das vom Gegenhalter entfernte Ende, den Endabschnitt erreicht oder sogar durch ihn hindurch tritt. Wenn der Zugkopf dann an seinem freien Ende expandiert wird, kann er in ausreichendem Maße Kräfte auf den Schaft am Endabschnitt ausüben, um bei einem nachfolgenden Zug auf den Endabschnitt den Schaft zu verformen. Die Arbeitsweise eines derartigen Setzgeräts ist also relativ einfach. Man benötigt lediglich ein Einfahren und Expandieren des Zugdornes, bevor man die notwendige Setzkraft durch Ziehen am Zugkopf erzeugen kann. Nach der erfolgten Verformung des Schaftes muss der Zugkopf lediglich wieder in radialer Richtung verkleinert werden, so dass er durch den Längskanal wieder aus dem Verbindungselement herausbewegt werden kann.

Hierbei ist bevorzugt, dass der Zugkopf mindestens zwei Werkzeugelemente und eine Spreizeinrichtung aufweist. Die Spreizeinrichtung sorgt dafür, dass die beiden Werkzeugelemente zumindest am freien Ende des Zugkopfes voneinander entfernt werden können, so dass die radiale Expansion bewirkt werden kann.

Dies lässt sich in einer bevorzugten Ausgestaltung dadurch bewerkstelligen, dass die Spreizeinrichtung zwischen den Werkzeugelementen in Zugrichtung bewegbar ist. Die Spreizeinrichtung drückt dann die Werkzeugelemente auseinander, so dass der Zugkopf expandiert. Man kann dieses Spreizen entweder über die gesamte Länge der Werkzeugelemente bewirken oder man kann das Spreizen auf den Bereich des freien Endes des Zugkopfes beschränken.

In einer alternativen Ausgestaltung ist vorgesehen, dass die Werkzeugelemente relativ zueinander um eine Schwenkachse verschwenkbar sind und die Spreizeinrichtung eine Spanneinrichtung aufweist, die auf der vom freien Ende abgewandten Seite der Schwenkachse angeordnet ist. Die Spanneinrichtung drückt dann die beiden Werkzeugelemente zusammen. Dieses Zusammendrücken wird durch die Schwenkachse umgesetzt in ein Auseinanderbewegen der Werkzeugelemente im Bereich des freien Endes des Zugkopfes. Auch dadurch lässt sich eine Expansion des Zugkopfes an seinem freien Ende bewirken.

In einer bevorzugten Ausgestaltung weisen die Werkzeugelemente auf ihrer radialen Außenseite mindestens eine scharfe Kante, insbesondere in Form einer Verzahnung, auf. Eine derartige Verzahnung kann beispielsweise eine Abfolge von dreieckigen Spitzen aufweisen. Wenn der Zugkopf im Bereich des freien Endes expandiert, dann graben sich die scharfen Kanten in die Innenseite des Endabschnitts ein. Dadurch wird eine form- und reibschlüssige Verbindung geschaffen, über die in ausreichendem Maße Zugkräfte auf den Endabschnitt ausgeübt werden können. Man muss dann lediglich die Werkzeugelemente in eine Richtung aus dem Verbindungselement heraus bewegen, um über den Endabschnitt den Schaft zu verformen.

Hierbei ist bevorzugt, dass die Spreizeinrichtung einen Konus aufweist, der im Bereich des freien Endes der Werkzeugelemente angeordnet ist und dessen Durchmesser sich in eine Richtung vom Gegenhalter weg vergrößert. Wenn der Konus zwischen die Werkzeugelemente hineingezogen wird, dann drückt er die Werkzeugelemente auseinander, so dass sie sich beispielsweise an die Innenseite des Endabschnitts anlegen oder mit ihrer scharfen Kante eingraben können.

Hierbei ist bevorzugt, dass die Spreizeinrichtung als Zugstab ausgebildet ist. Der Zugstab weist dann im Bereich des freien Endes den Konus auf. Dies ermöglicht einen sehr einfachen Setzvorgang. Der Zugstab wird zunächst so durch die Werkzeugelemente bewegt, dass der Konus in ausreichendem Maße aus den Werkzeugelementen im Bereich des freien Endes vorsteht. In diesem Zustand kann der Zugstab mit den Werkzeugelementen durch den Längskanal hindurch bewegt werden, ohne dass diese Bewegung durch irgendwelche Elemente behindert wird. Wenn die Werkzeugelemente dann mit der scharfen Kante oder mit anderen Kraftübertragungsmitteln im Bereich des Endabschnitts angekommen sind, wird die Bewegungsrichtung des Zugstabes einfach umgekehrt und der Zugstab in eine Richtung aus dem Verbindungselement hinaus bewegt. Hierbei werden die Werkzeugelemente zunächst festgehalten, so dass sie sich nicht in Zugrichtung mit dem Zugstab bewegen können, sondern durch den Konus am Zugstab aufgespreizt werden. Wenn dann der notwendige Eingriff zwischen den Werkzeugelementen und dem Endabschnitt hergestellt worden ist, werden die Werkzeugelemente gemeinsam mit dem Zugstab in eine Richtung aus dem Verbindungselement heraus bewegt, so dass über die Werkzeugelemente die notwendige Zugkraft auf den Endabschnitt ausgeübt werden kann, die zur Verformung des Schaftes führt.

Hierbei ist bevorzugt, dass der Konus eine Stufe aufweist, die am freien Ende der Werkzeugelemente zur Anlage bringbar ist. Die Stufe begrenzt den Spreizvorgang. Wenn der Konus mit der Stufe am freien Ende der Werkzeugelemente zur Anlage gekommen ist, ist ein weiteres Spreizen nicht mehr möglich. Man verhindert dadurch ein ungewolltes Verklemmen der Werkzeugelemente im Endabschnitt oder an anderer Stelle.

In einer alternativen Ausgestaltung kann vorgesehen sein, dass die Werkzeugelemente jeweils einen Vorsprung aufweisen, der auf seiner dem Gegenhalter zugewandten Seite eine Anlagefläche bildet. In diesem Fall müssen die Werkzeugelemente so weit durch den Längskanal hindurchgeführt werden, dass der Vorsprung aus dem Schaft herausragt. Wenn dann die Werkzeugelemente gespreizt werden und die Werkzeugelemente in die entgegen gesetzte Richtung, also in eine Richtung aus dem Verbindungselement heraus, bewegt werden, dann kommen die Anlageflächen zur Anlage an die freie Stirnseite des Endabschnitts und können dadurch die erforderlichen Zugkräfte auf den Endabschnitt übertragen.

Vorzugsweise ist der Zugantrieb von einer Batterie gespeist. Zweckmäßigerweise wird es sich dabei um eine wieder aufladbare Batterie handeln. Das Setzgerät wird dadurch sehr flexibel in der Handhabung, weil keine Versorgungsleitungen mitgeführt werden müssen.

Die Erfindung wird im Folgenden anhand von bevorzugten Ausführungsbeispielen in Verbindung mit einer Zeichnung beschrieben. Hierin zeigen:
- Fig. 1: ein Verbindungselement im Längsschnitt und im Querschnitt,
- Fig. 2: eine schematische Darstellung eines Setzgerätes,
- Fig. 3: eine erste Ausgestaltung eines Zugkopfes in schematischer Darstellung,
- Fig. 4: eine zweite Ausgestaltung eines Zugkopfes in schematischer Darstellung und
- Fig. 5: eine dritte Ausgestaltung eines Setzkopfes in schematischer Nachstellung.

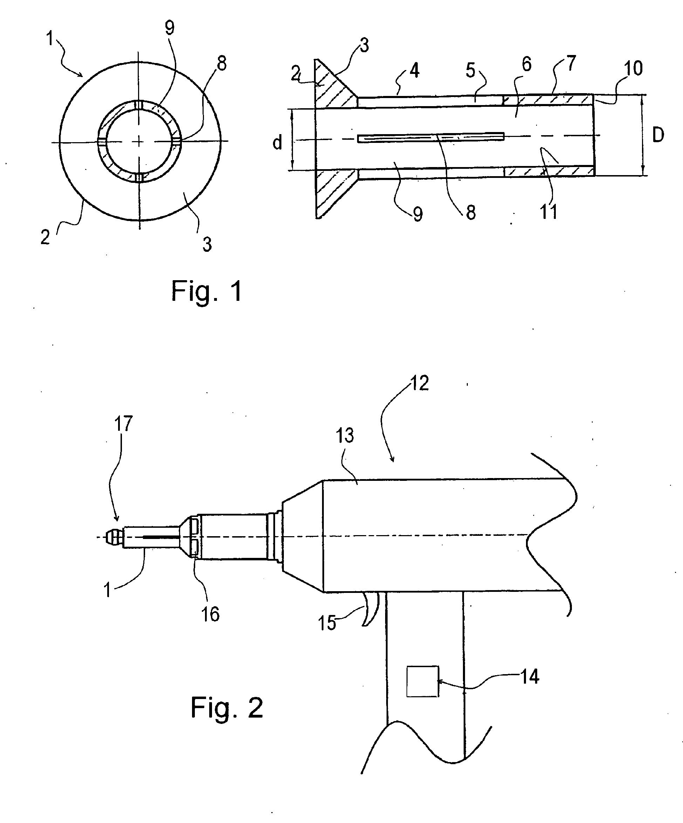

Fig. 1a zeigt einen Querschnitt durch ein Verbindungselement 1. Fig. 1b zeigt einen Längsschnitt durch das Verbindungselement 1.

Das Verbindungselement 1 weist einen Setzkopf 2 auf, der über eine konisch ausgebildete Fläche 3 in einen Schaft 4 übergeht. Der Schaft 4 schließt sich an den Setzkopf 2 an. Der Schaft 4 weist eine Wand 5 auf, die einen Längskanal 6 umgibt. Der Schaft 6 weist einen vom Setzkopf 2 abgewandten Endabschnitt 7 auf. Zwischen dem Setzkopf 2 und dem Endabschnitt 7 sind in Umfangsrichtung verteilt mehrere Längsschlitze 8 angeordnet. Zwischen den Längsschlitzen 8 verbleiben Schaftbereiche 9. Der Schaft 4 weist an seinem vom Setzkopf 2 abgewandten Ende eine Stirnseite 10 auf. Der Endabschnitt 7 weist eine dem Längskanal 6 zugewandte Innenseite 11 auf, die glatt ist. Mit anderen Worten weist die Innenseite 11 keine Befestigungskonturen für die Befestigung eines Werkzeugs auf, über das Zugkräfte übertragen werden können, die zur Verformung der Schaftbereiche 9 führen.

Der Längskanal 6 weist über die Länge des Verbindungselements einen gleich bleibenden Querschnitt auf. Vorzugsweise ist der Längskanal 6 als Hohlzylinder ausgebildet.

Der Schaft 4 des Verbindungselements 1 weist einen Außendurchmesser D von mindestens 8 mm auf. Vorzugsweise ist der Außendurchmesser D noch größer und beträgt beispielsweise 10 mm, 12 mm oder 15 mm.

Der Längskanal 6 weist einen Durchmesser d auf, der um das Zweifache der radialen Dicke der Wand 5 kleiner ist als der Außendurchmesser D. Die radiale Dicke der Wand 5 beträgt mindestens 1 mm, vorzugsweise mindestens 1,2 mm und noch bevorzugterweise mindestens 1,5 mm.

Ein derartiges Verbindungselement kann beispielsweise bei einem Außendurchmesser D des Schaftes 4 von 12 mm durchaus eine Schraube M12 ersetzen.

Fig. 2 zeigt ein zum Setzen eines derartigen Verbinders 1 geeignetes Setzgerät 12 mit einem Zugantrieb 13, der von einer Batterie 14 mit elektrischer Energie versorgt wird, wenn ein Betätigungshebel 15 betätigt wird. Anstelle einer elektrischen Energieversorgung kann man auch eine hydraulische, pneumatische oder hydropneumatische Energieversorgung verwenden.

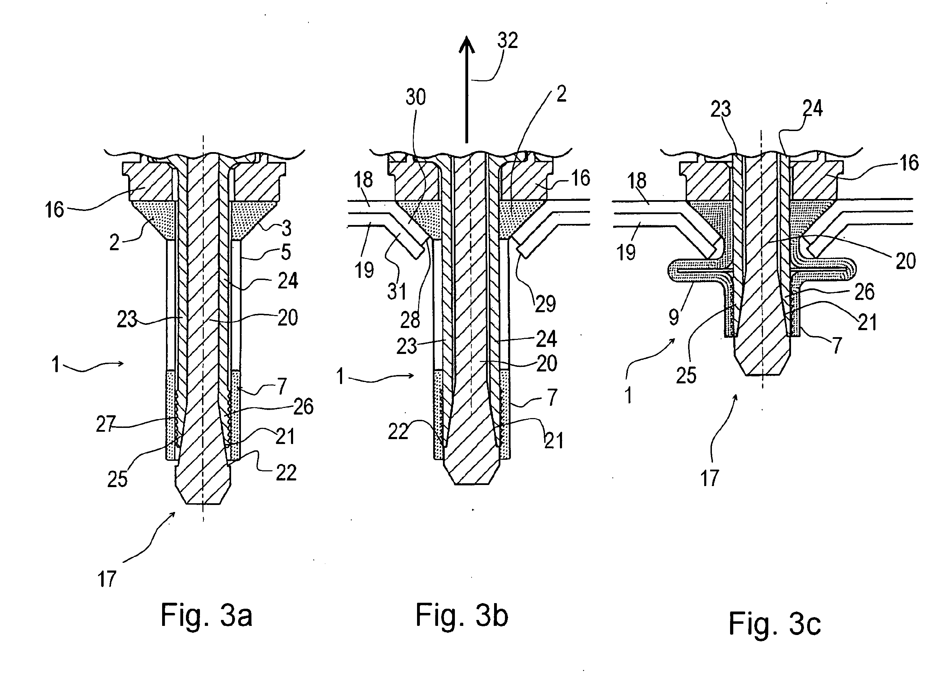

Ein Verbindungselement 1 ist bereits an das Setzgerät 2 angesetzt. Das Verbindungselement 1 liegt an einem Gegenhalter 16 an. Ein Setzkopf 17, der in mehreren Ausgestaltungen in Zusammenhang mit den Fig. 3 bis 5 erläutert wird, ist durch das Verbindungselement 1 hindurch geführt und ragt hier aus dem Verbindungselement 1 heraus. Der Zugkopf 17 kann durch den Zugantrieb 13 in Richtung zum Gegenhalter 16 bewegt werden und übt dabei eine Kraft auf den Endabschnitt 7 aus, die ausreicht, um die Schaftbereiche 9 zu verformen.

Fig. 3 zeigt eine erste Ausgestaltung des Zugkopfes 17. Hierbei zeigt Fig. 3a einen Verbinder 1 auf dem Zugkopf, Fig. 3b zeigt den Verbinder 1, der durch Bohrungen in zwei aufeinander liegenden Platten 18, 19 hindurchgeführt ist, zu Beginn eines Setzvorganges und Fig. 3c zeigt den Verbinder 1 am Ende des Setzvorganges.

Der Zugkopf 17 weist einen Zugstab 20 auf, der zu seinem freien Ende hin mit einem Konus 21 versehen ist. Der Konus 21 weist einen Durchmesser auf, der sich in eine Richtung vom Gegenhalter 16 weg vergrößert. An den Konus 21 schließt sich eine Stufe 22 an. Der größte Durchmesser des Zugstabs 20, der sich im Bereich seines freien Endes 23 ergibt, ist etwas kleiner als der Innendurchmesser d des Längskanals 6, so dass der Zugstab 20 ohne Probleme über die gesamte Länge durch den Längskanal 6 hindurch geführt werden kann.

Der Zugstab 20 ist zwischen zwei Werkzeugelementen 23, 24 angeordnet. Die Werkzeugelemente 23, 24 weisen an ihren freien Enden 25, 26, die sich in der in Fig. 3a dargestellten Positionen innerhalb des Endabschnitts 7 befinden, innen eine konische Aufweitung auf. Diese Aufweitung ist an den Konus 21 angepasst.

An ihrer radialen Außenseite sind die Enden 25, 26 mit mehreren scharfen Kanten 27 versehen, die beispielsweise durch eine Verzahnung aus dreieckförmig ausgebildeten Vorsprüngen gebildet sein kann.

In der in Fig. 3a dargestellten Position, in der der Zugstab 20 weit genug durch das Verbindungselement 1 hindurch geführt worden ist, steht im Längskanal 6 zwischen dem Zugstab 20 und der Wand 5 noch ausreichend Platz zur Verfügung, um die beiden Werkzeugelemente 23, 24 unterzubringen. Anstelle der beschriebenen zwei Werkzeugelemente 23, 24 können natürlich auch mehr Werkzeugelemente vorgesehen sein, beispielsweise drei oder vier Werkzeugelemente, die in Umfangsrichtung um den Zugdorn 20 herum gleichmäßig verteilt sind.

Der so auf den Zugkopf 17 aufgeschobene Verbinder 1 kann dann durch zwei Bauelemente, beispielsweise Platten 18, 19 oder Profile hindurch geführt werden. Die beiden Platten 18, 19 weisen jeweils entsprechende Durchgangsöffnungen 28, 29 auf. Die beiden Platten 18, 19 können im Bereich der Durchgangsöffnungen 28, 29 mit konischen Verformungen 30, 31 versehen sein, die zur Fläche 3 des Setzkopfes 2 passen, um auch einen Formschluss zwischen den beiden Platten 18, 19 zu bewirken.

Sobald der Verbinder 1 durch die Durchgangsöffnungen 28, 29 hindurchgeführt worden ist, bis der Setzkopf 2 an der Verformung 30 der einen Platte 18 anliegt, wird der Zugstab 20 in eine Richtung in das Verbindungselement 1 hinein bewegt. Die Werkzeugelemente 23, 24 werden in diesem Augenblick allerdings noch gegen eine Bewegung festgehalten. Die Bewegung des Zugstabes 20 wird fortgesetzt, bis die Stufe 22 an den Werkzeugelementen 23, 24 zur Anlage kommt. Bei dieser Bewegung werden die Werkzeugelemente 23, 24 durch den Konus 21 auseinandergespreizt, so dass sie sich mit den Kanten 27 in die Innenwand des Längsabschnitts 7 eingraben und hier eine kraftschlüssige Verbindung erzeugen.

Bei einer weiteren Bewegung des Zugstabs 20 in die durch einen Pfeil 32 symbolisierte Zugrichtung nimmt der Zugstab 20 über die Kante 22 die Werkzeugelemente 23 mit, die ihrerseits die Zugkraft des Zugstabs 20 auf den Endabschnitt 7 übertragen. Die auf den Endabschnitt 7 wirkende Zugkraft bewirkt, dass sich die Schaftbereiche 9 radial nach außen verformen und sich dann an die andere Platte 19 anlegen, wie dies in Fig. 3c dargestellt ist.

Sobald dieser Zustand erreicht ist, muss der Zugstab 20 lediglich ein Stück wieder entgegen der Zugrichtung 32 bewegt werden, bis der Konus 21 von den Enden 25, 26 der Werkzeugelemente 23, 24 frei kommt. Die Werkzeugelemente 23, 24 können sich dann wieder radial einwärts bewegen, beispielsweise aufgrund ihrer eigenen Federwirkung oder aufgrund einer Ringfeder, mit der die Werkzeugelemente 23, 24 in nicht näher dargestellter Weise versehen sein können. Sobald die Enden 25, 26 der Werkzeugelemente 23, 24 vom Endabschnitt 7 frei gekommen sind, kann der gesamte Zugkopf 17 aus dem gesetzten Verbindungselement 1 herausgezogen werden.

Der Setzvorgang ist damit beendet.

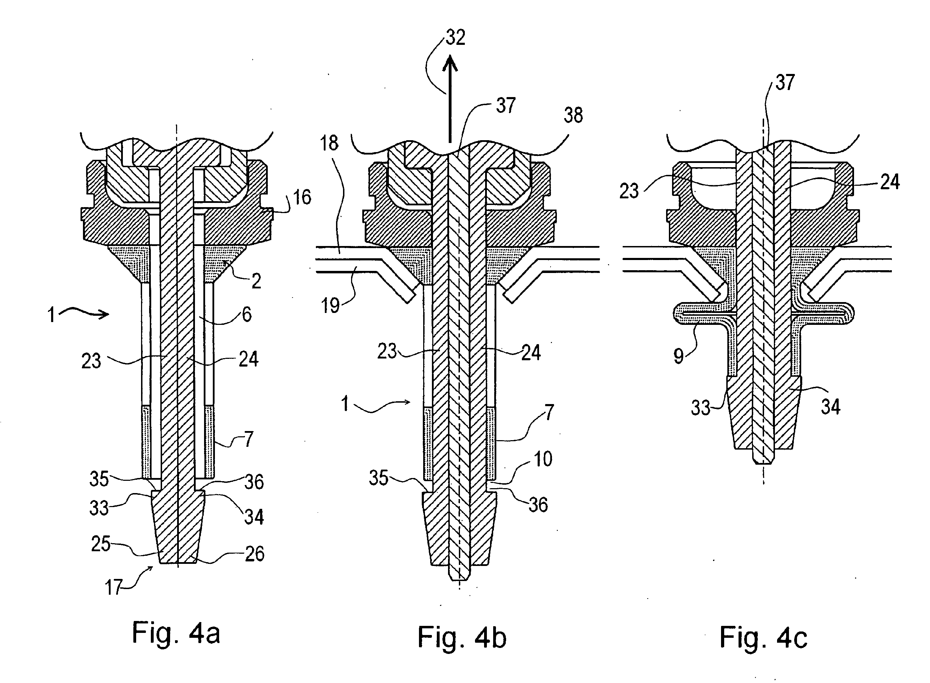

Fig. 4 zeigt eine abgewandelte Ausgestaltung eines Zugkopfes 17. Gleiche Elemente wie in den Fig. 1 bis 3 sind mit den gleichen Bezugszeichen versehen.

Bei der Ausgestaltung nach Fig. 4a weisen die Werkzeugelemente 23, 24 im Bereich ihrer freien Enden 25, 26 jeweils einen Vorsprung 33, 34 auf, der auf seiner dem Gegenhalter 16 zugewandten Seite eine Anlagefläche 35, 36 bildet. Die Vorsprünge 33, 34 weisen zusammen einen Querschnitt auf, der noch durch den Längskanal 6 hindurch passt, so dass die Werkzeugelemente 23, 24 durch das gesamte Verbindungselement 1 hindurch geführt werden können, bis ihre freien Enden 25, 26 aus dem Verbindungselement 1 herausragen. Wenn das so auf den Zugkopf aufgesetzte Verbindungselement 1 durch die Platten 18, 19 hindurchgeführt worden ist, wird ein Spreizelement 37 zwischen die beiden Werkzeugelemente 23, 24 eingeschoben, so dass die beiden Werkzeugelemente 23, 24 über ihre gesamte Länge einen durch das Spreizelement 36 definierten Abstand zueinander erhalten. Dieser Abstand ist so groß, dass die Anlageflächen 35, 36 in Überdeckung mit der Stirnseite 10 des Verbindungselements gelangen. Wenn dann die beiden Werkzeugelemente 23, 24 in Zugrichtung 32 bewegt werden, beispielsweise durch einen entsprechenden Zugmechanismus 38, dann kommen die Anlageflächen 35, 36 in Anlage an die Stirnseite 10 und können dadurch die entsprechenden Zugkräfte auf den Endabschnitt des Verbindungselements 1 übertragen. Diese Zugkräfte führen dann, wie bei der Ausgestaltung nach Fig. 3 auch, zu einer Verformung der Schaftbereiche 9.

Sobald das Spreizelement 37 zwischen den beiden Werkzeugelementen 23, 24 entfernt wird, kommen die Vorsprünge 33, 34 von dem Endabschnitt 10 frei und können aus dem Verbindungselement 1 herausgezogen werden.

Bei der Ausgestaltung nach Fig. 4 ist es zweckmäßig, das Spreizelement 37 von der Seite des Gegenhalters 16 her zwischen den beiden Werkzeugelementen 23, 24 einzubringen.

Natürlich kann man ein derartiges Spreizelement 37 auch dann verwenden, wenn die Zugkraft von den Werkzeugelementen 23, 24 nicht über die Anlageflächen 35, 36 auf den Endabschnitt 7 übertragen werden soll, sondern durch scharfe Kanten 27, wie sie in Fig. 3 dargestellt sind, oder durch Reibschluss.

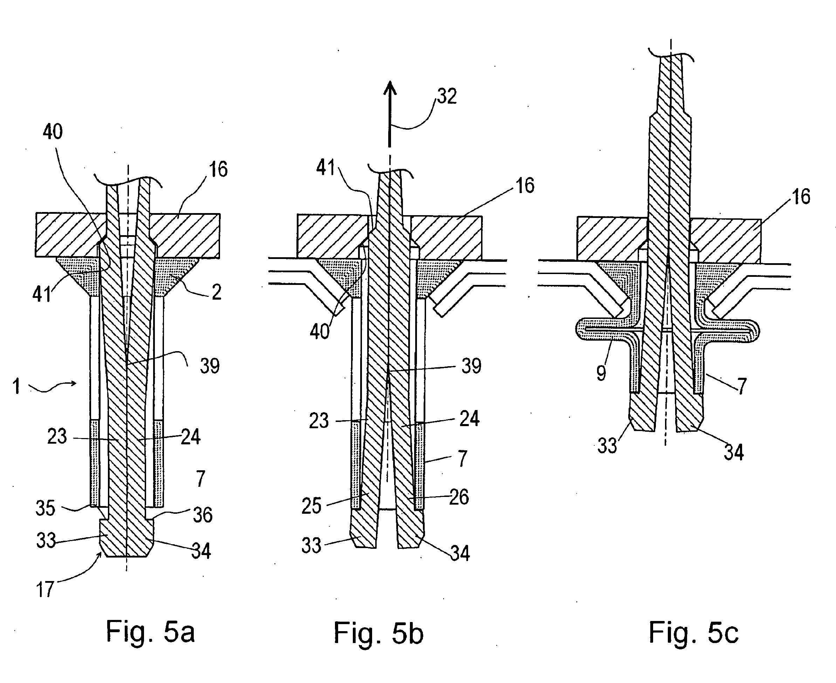

Fig. 5 zeigt eine weitere Ausgestaltung eines Zugkopfes 17, bei der die gleichen Elemente wie in den Fig. 1 bis 4 mit den gleichen Bezugszeichen versehen sind. Die Ausgestaltung nach Fig. 5 verwendet wieder Vorsprünge 33, 34 mit Anlageflächen 35, 36 an den Werkzeugelementen 23, 24. Sie kann aber auch mit einer Eingriffsgeometrie versehen sein, wie sie beispielsweise durch scharfe Kanten 27 gebildet ist, die in Fig. 3 dargestellt ist.

Bei der Ausgestaltung nach Fig. 5 verlaufen die beiden Werkzeugelemente 23, 24 an ihren einander zugewandten Seiten nicht über ihre gesamte Länge parallel. Vielmehr gibt es eine Schwenkachse 39, bis zu der sie in der in Fig. 5a dargestellten Position parallel verlaufen und von der aus sie in Richtung auf den Gegenhalter 16 hin divergieren.

Der Gegenhalter 16 weist Schrägflächen 40 auf, die mit entsprechenden Schrägflächen 40, 41 an den Werkzeugelementen 23, 24 im Bereich des Gegenhalters 16 zusammenwirken. Wenn man die beiden Werkzeugelemente 23, 24 in Zugrichtung 32 bewegt, dann bewirken diese Schrägflächen 40, 41, dass sich die beiden Werkzeugelemente 23, 24 an ihren Enden, die durch den Gegenhalter 16 geführt sind, aneinander anlegen und an dem anderen Ende 25, 26 voneinander entfernen, so dass die Vorsprünge 33, 34 den Endabschnitt übergreifen können. Durch eine weitere Bewegung der Werkzeugelemente 23, 24 in Zugrichtung 32 erfolgt dann eine Verformung der Schaftbereiche 9, wie dies in Fig. 5c dargestellt ist. Das Lösen der Werkzeugelemente 23, 24 vom Verbindungselement 1 erfolgt durch eine Bewegung entgegen der Zugrichtung 32, bis der Zustand der Fig. 5a erreicht ist. Danach wird der Zugkopf 17 insgesamt aus dem Verbindungselement 1 entfernt.

## Patentansprüche

1. Verbindungselement (1) mit einem Setzkopf (2) und einem an den Setzkopf (2) anschließenden Schaft (4), der eine einen Längskanal (6) umgebende Wand (5) aufweist, die zwischen dem Setzkopf (2) und einem vom Setzkopf (2) abgewandten Endabschnitt (7) mindestens einen Längsschlitz (8) aufweist, **dadurch gekennzeichnet, dass** der Endabschnitt (7) an seiner dem Längskanal (6) zugewandten Innenseite (11) glatt ist.

2. Verbindungselement nach Anspruch 1, **dadurch gekennzeichnet, dass** der Längskanal (6) über seine Länge einen gleich bleibenden Querschnitt aufweist.

3. Verbindungselement nach Anspruch 1 oder 2, **dadurch gekennzeichnet, dass** der Schaft (4) einen Außendurchmesser (D) von mindestens 8 mm , vorzugsweise mindestens 10 mm aufweist.

4. Verbindungselement nach einem der Ansprüche 1 bis 3, **dadurch gekennzeichnet, dass** die Wand (5) eine radiale Dicke von mindestens 1 mm, vorzugsweise mindestens 1,2 mm aufweist.

5. Verbindungselement nach einem der Ansprüche 1 bis 4, **dadurch gekennzeichnet, dass** der Setzkopf (2) mit einer konisch ausgebildeten Fläche (3) in den Schaft (4) übergeht.

6. Setzgerät (12) für ein Verbindungselement (1), das einen Setzkopf (2) und einen an den Setzkopf (2) anschließenden Schaft (4) mit einer einen Längskanal (6) umgebenden Wand (5) aufweist, die zwischen dem Setzkopf (2) und einem vom Setzkopf (2) abgewandten Endabschnitt (7) mindestens einen Längsschlitz (8) aufweist, wobei das Setzgerät (12) einen Gegenhalter (16), einen Zugantrieb (13) und einen durch den Zugantrieb (13) in einer Zugrichtung relativ zum Gegenhalter (16) bewegbaren Zugkopf (17) aufweist, **dadurch gekennzeichnet, dass** der Zugkopf (17) zumindest an seinem freien Ende (25, 26) in radialer Richtung expandierbar ist.

7. Setzgerät nach Anspruch 6, **dadurch gekennzeichnet, dass** der Zugkopf (17) mindestens zwei Werkzeugelemente (23, 24) und eine Spreizeinrichtung (21; 37; 40, 41) aufweist.

8. Setzgerät nach Anspruch 7, **dadurch gekennzeichnet, dass** die Spreizeinrichtung (21, 37) zwischen den Werkzeugelementen (23, 24) in Zugrichtung (32) bewegbar ist.

9. Setzgerät nach Anspruch 7, **dadurch gekennzeichnet, dass** die Werkzeugelemente (23, 24) relativ zueinander um eine Schwenkachse (39) verschwenkbar sind und die Spreizeinrichtung (40, 41) eine Spanneinrichtung aufweist, die auf der vom freien Ende abgewandten Seite der Schwenkachse (39) angeordnet ist.

10. Setzgerät nach einem der Ansprüche 7 bis 9, **dadurch gekennzeichnet, dass** die Werkzeugelemente (23, 24) auf ihrer radialen Außenseite jeweils mindestens eine scharfe Kante (27), insbesondere in Form einer Verzahnung, aufweisen.

11. Setzgerät nach Anspruch 10, **dadurch gekennzeichnet, dass** die Spreizeinrichtung einen Konus (21) aufweist, der im Bereich des freien Endes (25, 26) der Werkzeugelemente (23, 24) angeordnet ist und dessen Durchmesser sich in eine Richtung vom Gegenhalter (16) weg vergrößert.

12. Setzgerät nach Anspruch 11, **dadurch gekennzeichnet, dass** die Spreizeinrichtung als Zugstab (20) ausgebildet ist.

13. Setzgerät nach Anspruch 12, **dadurch gekennzeichnet, dass** der Konus (21) eine Stufe (22) aufweist, die am freien Ende (25, 26) der Werkzeugelemente (23, 24) zur Anlage bringbar ist.

14. Setzgerät nach einem der Ansprüche 7 bis 9, **dadurch gekennzeichnet, dass** die Werkzeugelemente (23, 24) jeweils einen Vorsprung (33, 34) aufweisen, der auf seiner dem Gegenhalter (16) zugewandten Seite eine Anlagefläche (35, 36) bildet.

15. Setzgerät nach einem der Ansprüche 6 bis 14, **dadurch gekennzeichnet, dass** der Zugantrieb (13) von einer Batterie (14) oder einer hydraulischen oder pneumatischen oder hydropneumatischen Versorgung gespeist ist.
